# EUROPEAN PATENT SPECIFICATION

(11) **EP 3 409 519 B1**
(45) Date of publication and mention of the grant of the patent: **26.02.2020**
(21) Application number: 18171223.3
(22) Date of filing: 08.05.2018
(51) Int. Cl.: B60J 1/00

(54) **ASSEMBLY TOOL FOR MOVEABLE SIDE DOOR WINDOW OF A MOTOR VEHICLE AND METHOD TO ALIGN SIDE DOOR WINDOW**
MONTAGEWERKZEUG EINES BEWEGLICHEN SEITENTÜRFENSTERS EINES KRAFTFAHRZEUGS UND VERFAHREN ZUM AUSRICHTEN EINES SEITENTÜRFENSTERS
OUTIL D'ASSEMBLAGE POUR UNE FENÊTRE MOBILE D'UNE PORTE LATÉRALE D'UN VÉHICULE AUTOMOBILE ET PROCÉDÉ D'ALIGNEMENT DE LA FENÊTRE

(30) Priority: 08.05.2017 EP 17169954
(43) Date of publication of application: 05.12.2018
(73) Proprietor: Ford Global Technologies, LLC, Dearborn, MI 48126 (US)
(72) Inventor: Wagner, Marvin, 50733 Köln (DE); Zwetkow, Daniel, 51377 Leverkusen (DE); Lehmkuhl, Mirko, 40883 Ratingen (DE)
(74) Representative: Dörfler, Thomas

(56) References cited:
- DE-A1-102015 004 497
- FR-A1- 3 007 330

## Description

In side doors of motor vehicles with automatic window regulators, the upper window glass edge has to be parallel to the header profile to enable a so-called pinch protection. Pinch protection is a legal requirement for the automatic run of moveable side door windows.

A means and a method for alignment of a vehicle rear door window for aesthetic purposes is disclosed in FR 3 007 330 A1. The means comprises several shim devices for holding the window glass in position during assembly. The shim devices are placed on the upper and lower edges of the window glass and are used to fix the position of the glass relative to the rear door of the vehicle. However, the method is not suitable for vertically moveable windows operated by automatic window regulators.

A window regulator concept with a clip in slider at the front rail and a clamp slider at the rear side rail of the window regulator requires an additional parallel setting process during the assembly of the components.

There are currently mainly two methods used for the parallel setting process of the side glass:
The first method is manual or automated alignment and setting without any tool. This method is not robust and prone to tolerances affecting the resulting orientation of the glass.

The second method is using two plastic blocks positioned between the upper edge of the glass and the door frame header, the glass is lifted to touch condition with the two blocks to achieve parallel setting along the upper edge of the glass to the Header profile.

If such blocks are used with a window regulator concept with a clip in slider at the front rail and a clamp slider at the rear side rail of the window regulator system, constant non parallel condition is caused, as the glass is pushed too deep into the adjustable clamp. The plastic blocks in the upper area are used as some kind of stopping device for the moving side door glass. The glass is moved upwards until block condition and then fixed in the slider. This method is not possible with the clamp window regulator design. Any force applied to the upper edge of the glass would push the glass too deep into the clamp in slider and lead automatically to an unacceptable condition.

Therefore, it is an object of the invention to provide an improved method to align the window glass - preferably window glasses with a clip in slider at the front rail and a clamp slider at the rear side rail of the window regulator system, but not necessarily limited to such systems - in a reliable, quick and convenient manner and further providing a tool enabling such a method.

This object is achieved by an assembly tool with the features of claim 1 and an aligning method with the steps of claim 6.

Preferred embodiments of the invention are expounded in the dependent claims.

According to the invention, an assembly tool for moveable side door window of a motor vehicle to align window upper glass edge parallel to a header profile, eliminating the fact that the window glass during mounting condition, when the glass is not yet locked to its drive mechanism, is tiltable to some extent within the side rails which could cause misalignment, comprises a main body which is configured to be positioned on the top edge of the window glass, and a hook element, which is configured to interpose into one side gap between window side edge and one side rail with a spacer portion of the hook element in order to eliminate the tilting degree of freedom during the mounting process, but still enabling vertical movement of the glass within the side rails for mounting process.

In connection with this disclosure, the term *"alignment parallel to a header profile"* should be understood as parallel alignment within certain given tolerances, and not necessarily as "ideal" parallel alignment.

Further, in connection with this disclosure, the directional term "vertical" shall indicate the regular opening and closing direction of the side door window glass, which is normally vertically, although the tool may be also used with the vehicle door in different orientation for mounting purposes.

In addition, it may be noted that the assembly tool and method are preferably used for automatic window regulators with a clip in slider at the front rail and a clamp slider at the rear side rail of the window regulator. Nevertheless, the tool according to the present invention could also be used for alternative window regulator concepts, for example in connection with manually operated side windows.

The end of the hook element is formed by a spacer of defined width, which can create a parallel gap between glass side edge and the door frame side edge when the glass is moved downwards with the tool.

A defined gap at this point automatically leads to a parallel condition between the upper edge of the side door glass and the header profile.

The spacer portion may have an essentially constant thickness of 0.2 to 10 mm, preferably of about 2 mm, and a length of at least 5 times of the thickness.

Preferably, the main body of the assembly tool comprises a first section adjacent to the hook element essentially formed to extend parallel to the upper window glass edge and a second section opposite to the hook element which forms an angled lever enabling rotation of the tool after finishing the mounting process to remove the hook from the gap.

The different sections and elements of the assembly tool may be produced as integral part or made by joining separate elements.

By this overall geometry, it is enabled that the tool can be preferably placed on the top corner of the side window to the B-pillar. The glass is pushed with this tool in the direction of the seal. After the screw of the rear clamp slider has been fixed, the tool can be flipped out due to the geometry via a radius located in the window slot when the tool's rear lever arm is pushed downwards.

Further, at least the main body comprises preferably one or two support brackets that are configured to abut to the inner and/or glass surfaces to keep the tool in position.

The assembly tool further preferably comprises a bulbous rotation rest point in the transition between the first and the second section of the main body.

According to another aspect of the invention, a method for aligning a side door window glass of a motor vehicle by aligning the upper window glass edge parallel to a header profile during window glass mounting process comprises the following steps:
a) inserting an assembly tool with a hook element into at least one side gap between window side edge and one door frame side rail with a spacer portion of the hook element in order to eliminate a tilting degree of freedom during mounting process;
b) coupling the window glass to a window drive mechanism; and
c) removing the assembly tool.

The removal step may also comprise rotation of the assembly tool around a rotation point.

The invention is described in more detail with reference to the following detailed description and based upon preferred embodiments shown in the drawings, in which:
- Figure 1: shows a perspective view of an assembly tool according to the invention;
- Figure 1a: shows an enlarged view of the spacer portion of figure 1 intervening in the door frame side rail;
- Figure 2: shows a perspective view with the tool in assembled position;
- Figure 3: shows an enlarged perspective view of the tool in assembled position;
- Figure 4a: shows a cross sectional view of the assembly tool according lines A-A of figure 4b;
- Figure 4b: shows a frontal side view of the assembly tool; and

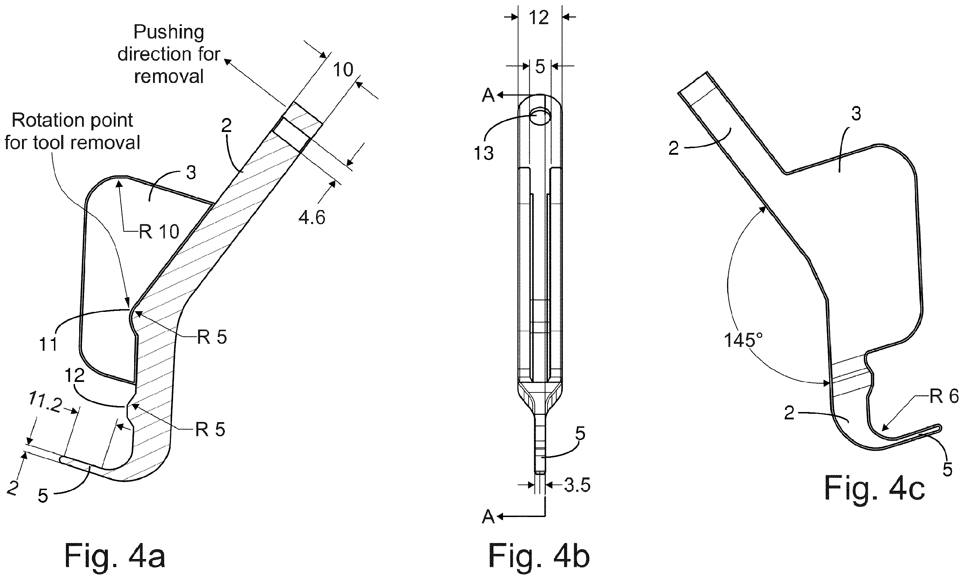

- Figure 4b: shows a side view of an assembly tool according to the invention.

A tool concept according to the present invention creates a defined gap between the rear edge of the side door glass and the bottom of the glass-run seal.

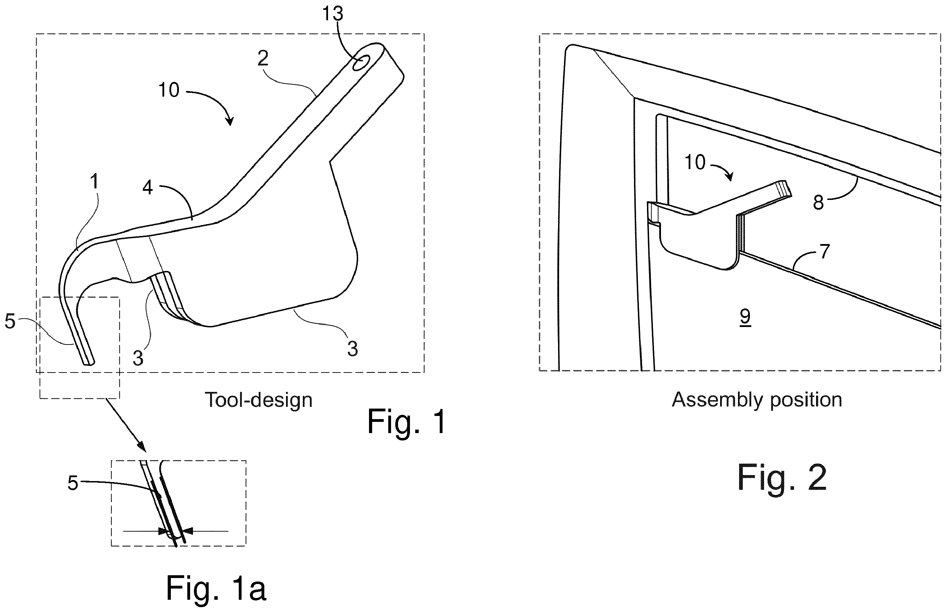

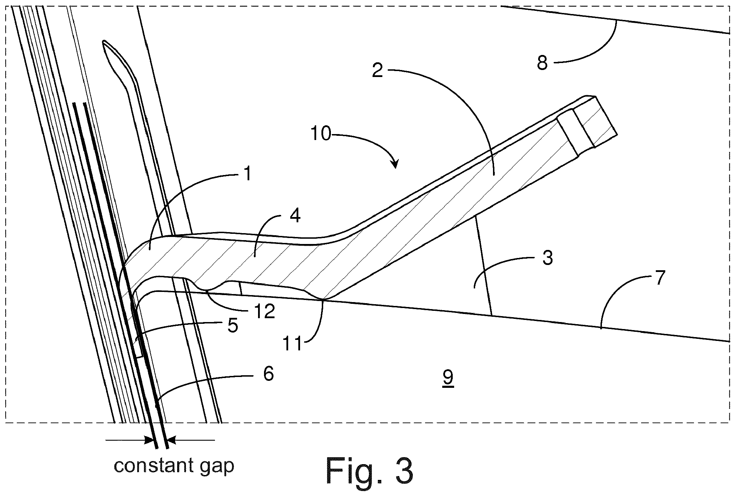

The tool 10, as shown in figures 1 to 4 (wherein in figures 4a-c, additionally some preferred dimensions are noted, reference numbers are characterised by a reference line, respectively), comprises a hook element 1 in the front area which surrounds the upper corner 7 of the side door glass 9 to the B-pillar. The end of the hook element 1 is formed by a spacer 5 of defined width, which creates a parallel gap between glass side edge and the door frame side edge 6 when the glass 9 is moved downwards with the tool 10.

A defined gap at this point automatically leads to a parallel condition between an upper edge 7 of the side door glass 9 and a header profile 8.

The tool 10 comprises apart from the hook element 1 a main body with two main sections, i.e. an essentially parallel first section 4 adjacent to the hook element 5 and an angled second section 2 which forms a lever for easy removal of the tool 10. The lever angle can be about 145° as shown in figure 4c. The hook element 1 ends in the spacer portion which is angled about 90° with regard to the parallel section 4 of the main body.

The tool 10 must be placed on the top corner of the side window to the B-pillar. The glass 9 is pushed with this tool 10 in the direction of the seal. After the screw of the rear clamp slider (not shown) has been fixed, the tool 10 can be flipped out due to the geometry via a radius 11 located in the window slot when the tool's angled rear lever 2 arm is pushed downwards.

In the middle area, there are two support brackets 3 as part of the tool 10 at the inner and outer side of the glass 9 that guide the tool 10 along the glass 9 and keep it in position. The side door glass 9 is positioned between these two support brackets 3.

Further, there is a radius in the middle area of the tool between the two support brackets 3 which creates a rotation point rest 11. In an area at the beginning of the hook element section 1, there is further a support point 12. Rotation point 11 and support point 12 are configured to abut against the upper window glass edge when the tool 10 is in an inserted position.

To remove the tool 10, the angled lever 2 arm is pushed downwards and the spacer 5 is pulled out of the space, whereby there may be a slight bending of the spacer portion 5.

Further, there is an opening 13 in the tool for handling and storage purposes.

The tool 10 may be made from every possible material, e.g. plastics or metal in any suitable forming method, e.g. by injection molding, casting or 3D-printing.

The tool 10 allows assembly and adjustment the side door glass 9 without applying any forces into the window regulator system.

### List of reference numerals

- 1: hook element
- 2: main body angled section / second section
- 3: support brackets
- 4: main body parallel section / first section
- 5: spacer portion of hook element
- 6: door frame side edge / rail
- 7: upper window glass edge
- 8: header profile
- 9: window glass
- 10: assembly tool
- 11: rotation rest point
- 12: support point
- 13: opening

## Claims

1. Assembly tool (10) for moveable side door window of a motor vehicle to align upper window glass edge (7) parallel to a header profile (8), eliminating the fact that the window glass (9) during mounting condition, when the glass is not yet locked to its drive mechanism, is tiltable to some extent within the side rails which could cause misalignment,
**characterised in that**
the assembly tool (10) comprises:
- a main body which is configured to be positioned on the upper glass edge (7), and
- a hook element (1) which is configured to interpose into one side gap between window side edge and one side rail (6) with a spacer portion (5) of the hook element (1) in order to eliminate the tilting degree of freedom during the mounting process, but still enabling vertical movement of the glass (9) within the side rails during mounting process.

2. Assembly tool (10) according to claim 1,
**characterised in that**
the main body of the assembly tool (10) comprises
- a first section (4) adjacent to the hook element (1) essentially formed to extend parallel to the upper window glass edge (7) and
- a second section (2) opposite to the hook element (1) which forms an angled lever enabling rotation of the tool (10) after finishing the mounting process to remove the spacer (5) from the gap.

3. Assembly tool (10) according to claim 1 or 2,
**characterised in that**
at least the main body comprises one or two support brackets (3) that are configured to abut to the inner and/or glass surfaces to keep the tool (10) in position.

4. Assembly tool (10) according to one of the preceding claims,
**characterised in that**
the spacer portion (5) has an essentially constant thickness of 0,2 to 10 mm, preferably about 2 mm, and has a length of at least 5 times of the thickness.

5. Assembly tool (10) according to one of claims 2 to 4,
**characterised in that**
the assembly tool comprises a bulbous rotation rest point (11) in the transition area between the first (4) and the second (2) section of the main body.

6. Method for aligning a side door window glass (9) of a motor vehicle by aligning the upper window glass edge (7) parallel to a header profile (8) during window glass mounting process,
**characterized in that** it comprises the following steps:
a) inserting an assembly tool (10) according to one of the claims 1 to 5 with a hook element (1) into at least one side gap between window side edge and one door frame side rail (6) with a spacer portion (5) of the hook element (1) in order to eliminate a tilting degree of freedom during mounting process;
b) coupling the window glass (9) to a window drive mechanism; and
c) removing the assembly tool (10).

7. Method according to claim 6,
**characterized in that**
the removal step comprises rotation of the assembly tool (10) around a rotation point (11).

## Patentansprüche

1. Montagewerkzeug (10) eines beweglichen Seitentürfensters eines Kraftfahrzeugs zum Ausrichten einer oberen Fensterscheibenkante (7) parallel zu einem Kopfprofil (8), die Tatsache eliminierend, dass die Fensterscheibe (9) während der Montagebedingung, wenn die Scheibe noch nicht in ihrem Antriebsmechanismus verriegelt ist, bis zu einem gewissen Ausmaß innerhalb der Seitenschienen neigbar ist, was Fehlausrichtung bewirken kann,
**dadurch gekennzeichnet, dass**
das Montagewerkzeug (10) Folgendes umfasst:
- einen Hauptkörper, dazu ausgelegt, an einer oberen Scheibenkante (7) positioniert zu werden, und
- ein Hakenelement (1), dazu ausgelegt, in eine seitliche Lücke zwischen der Fensterseitenkante und einer Seitenschiene (6) eingefügt zu werden, mit einem Abstandhalterteil (5) des Hakenelements (1), um den Neigefreiheitsgrad während des Montageprozesses zu eliminieren, aber weiterhin vertikale Bewegung der Scheibe (9) innerhalb der Seitenschienen während des Montageprozesses ermöglichend.

2. Montagewerkzeug (10) nach Anspruch 1,
**dadurch gekennzeichnet, dass**
der Hauptkörper des Montagewerkzeugs (10) Folgendes umfasst:
- einen ersten Abschnitt (4), angrenzend an das Hakenelement (1), im Wesentlichen ausgebildet, um sich parallel zur oberen Fensterscheibenkante (7) zu erstrecken, und
- einen zweiten Abschnitt (2) gegenüber dem Hakenelement (1), der einen angewinkelten Hebel bildet, der eine Rotation des Werkzeugs (10) nach Abschluss des Montageprozesses ermöglicht, um den Abstandhalter (5) aus der Lücke zu entfernen.

3. Montagewerkzeug (10) nach Anspruch 1 oder 2,
**dadurch gekennzeichnet, dass**
zumindest der Hauptkörper eine oder mehrere Stützhalterungen (3) umfasst, die dazu ausgelegt sind, an den inneren und/oder Scheibenoberflächen anzuliegen, um das Werkzeug (10) in Position zu halten.

4. Montagewerkzeug (10) nach einem der vorhergehenden Ansprüche,
**dadurch gekennzeichnet, dass**
der Abstandhalterteil (5) eine im Wesentlichen konstante Dicke von 0,2 bis 10 mm, vorzugsweise etwa 2 mm, hat und eine Länge von mindestens dem 5-fachen der Dicke hat.

5. Montagewerkzeug (10) nach einem der Ansprüche 2 bis 4,
**dadurch gekennzeichnet, dass**
das Montagewerkzeug einen bauchigen Rotationsruhepunkt (11) im Übergangsbereich zwischen dem ersten (4) und dem zweiten (2) Abschnitt des Hauptkörpers umfasst.

6. Verfahren zum Ausrichten einer Seitentürfensterscheibe (9) eines Kraftfahrzeugs durch Ausrichten der oberen Fensterscheibenkante (7) parallel zu einem Kopfprofil (8) während des Fensterscheibenmontageprozesses,
**dadurch gekennzeichnet, dass** es die folgenden Schritte umfasst:
a) Einsetzen eines Montagewerkzeugs (10) nach einem der Ansprüche 1 bis 5 mit einem Hakenelement (1) in zumindest eine seitliche Lücke zwischen einer Fensterseitenkante und einer Türrahmenseitenschiene (6) mit einem Abstandhalterteil (5) des Hakenelements (1), um einen Neigefreiheitsgrad während des Montageprozesses zu eliminieren;
b) Koppeln der Fensterscheibe (9) mit einem Fensterantriebsmechanismus; und
c) Entfernen des Montagewerkzeugs (10).

7. Verfahren nach Anspruch 6,
**dadurch gekennzeichnet, dass**
der Entfernungsschritt Rotation des Montagewerkzeugs (10) um einen Rotationspunkt (11) umfasst.

## Revendications

1. Outil de montage (10) pour fenêtre de porte latérale mobile d'un véhicule automobile pour aligner le bord supérieur (7) de la vitre de fenêtre parallèlement à un profilé de tête (8), éliminant le fait que la vitre de fenêtre (9), en condition de montage, lorsque la vitre n'est pas encore verrouillée à son mécanisme d'entraînement, peut basculer dans une certaine mesure à l'intérieur des rails latéraux, ce qui pourrait provoquer un désalignement,
**caractérisé en ce que**
l'outil d'assemblage (10) comprend :
- un corps principal qui est configuré pour être positionné sur le bord supérieur de la vitre (7), et
- un élément de crochet (1) qui est configuré pour s'intercaler dans un espace latéral entre le bord latéral de la fenêtre et un rail latéral (6) avec une partie d'espacement (5) de l'élément de crochet (1) afin d'éliminer le degré de liberté de basculement pendant le processus de montage, mais permettant toujours un mouvement vertical de la vitre (9) à l'intérieur des rails latéraux pendant le processus de montage.

2. Outil de montage (10) selon la revendication 1,
**caractérisé en ce que**
le corps principal de l'outil d'assemblage (10) comprend :
- une première section (4) adjacente à l'élément de crochet (1) essentiellement formée pour s'étendre parallèlement au bord supérieur de la vitre de fenêtre (7) et
- une deuxième section (2) opposée à l'élément de crochet (1) qui forme un levier coudé permettant la rotation de l'outil (10) après avoir terminé le processus de montage pour retirer l'espaceur (5) de l'espace.

3. Outil de montage (10) selon la revendication 1 ou 2,
**caractérisé en ce que**
au moins le corps principal comprend un ou deux supports (3) qui sont configurés pour venir en butée contre les surfaces intérieures et/ou vitrées pour maintenir l'outil (10) en position.

4. Outil d'assemblage (10) selon l'une des revendications précédentes,
**caractérisé en ce que**
la partie d'espacement (5) a une épaisseur essentiellement constante de 0,2 à 10 mm, de préférence d'environ 2 mm, et a une longueur d'au moins 5 fois l'épaisseur.

5. Outil d'assemblage (10) selon l'une des revendications 2 à 4,
**caractérisé en ce que**
l'outil d'assemblage comprend un point d'appui de rotation bulbeux (11) dans la zone de transition entre la première (4) et la deuxième (2) section du corps principal.

6. Procédé pour aligner une vitre de fenêtre de porte latérale (9) d'un véhicule automobile en alignant le bord supérieur (7) de la vitre de fenêtre parallèlement à un profilé de tête (8) pendant le processus de montage de la vitre de fenêtre,
**caractérisé en ce qu'**il comprend les étapes suivantes :
a) l'insertion d'un outil de montage (10) selon l'une des revendications 1 à 5 avec un élément de crochet (1) dans au moins un espace latéral entre le bord latéral de la fenêtre et un rail latéral (6) du châssis de porte avec une partie d'espacement (5) de l'élément de crochet (1) afin d'éliminer un degré de liberté de basculement pendant le processus de montage ;
b) l'accouplement de la vitre de fenêtre (9) à un mécanisme d'entraînement de fenêtre ; et
c) le retrait de l'outil de montage (10).

7. Procédé selon la revendication 6,
**caractérisé en ce que**
l'étape de retrait comprend la rotation de l'outil d'assemblage (10) autour d'un point de rotation (11).
